(19) Europäisches Patentamt

European Patent Office

Office européen des brevets

(11) **EP 1 129 019 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(21) Anmeldenummer: **00960545.2**

(22) Anmeldetag: **29.08.2000**

(51) Int Cl.⁷: **B65G 53/52**, B65G 53/66

(86) Internationale Anmeldenummer:
**PCT/EP2000/008423**

(87) Internationale Veröffentlichungsnummer:
**WO 2001/019711 (22.03.2001 Gazette 2001/12)**

(54) **VERFAHREN UND VORRICHTUNG ZUR PNEUMATISCHEN FÖRDERUNG VON SCHÜTTGUT**

METHOD AND DEVICE FOR THE PNEUMATIC TRANSPORT OF BULK GOODS

PROCEDE ET DISPOSITIF POUR LE TRANSPORT PNEUMATIQUE DE PRODUITS EN VRAC

(84) Benannte Vertragsstaaten:
**AT BE CH CY DE DK ES FI FR GB GR IE IT LI LU MC NL PT SE**

(30) Priorität: **10.09.1999 DE 19943504**

(43) Veröffentlichungstag der Anmeldung:
**05.09.2001 Patentblatt 2001/36**

(73) Patentinhaber: **Coperion Waeschle GmbH & Co. KG**
**88250 Weingarten (DE)**

(72) Erfinder:
• **ERNST, Reinhard**
**88250 Weingarten (DE)**
• **STARK, Bernhard**
**88273 Fronreute (DE)**

(74) Vertreter: **Rau, Albrecht et al**
**Rau, Schneck & Hübner**
**Königstrasse 2**
**90402 Nürnberg (DE)**

(56) Entgegenhaltungen:
WO-A-99/37565          US-A- 4 368 678
US-A- 4 758 117        US-A- 5 813 801

EP 1 129 019 B1

**Beschreibung**

Die Erfindung betrifft ein Verfahren zur pneumatischen Förderung von Schüttgut, insbesondere von Kunststoffgranulaten, durch eine Förderleitung, bei dem das Schüttgut an mindestens einem Aufgabeort mittels eines Schleusorgans in einen einstellbaren Fördergasstrom eingespeist und in Form diskreter, durch Polster aus Fördergas zueinander beabstandeter Schüttgutpfropfen vom Aufgabeort zu mindestens einem Zielort transportiert wird, sowie eine zur Durchführung des Verfahrens geeignete Vorrichtung.

Die pneumatische Förderung von Schüttgütern, beispielsweise von Granulaten aus Kunststoff, kann grundsätzlich als Flugförderung in Form eines in einem Fördergasstrom weitgehend gleichmäßig verteilten Schüttgutstroms bei niedriger Beladung (Verhältnis von Schüttgutmassenstrom zu Fördergasmassenstrom) und hoher Fördergeschwindigkeit oder als Langsamförderung bei hoher Beladung und niedriger Fördergeschwindigkeit in Form zueinander durch Gaspolster beabstandeter Schüttgutpfropfen erfolgen.

Die Errichtung von Anlagen zur Flugförderung von Schüttgut ist mit vergleichsweise niedrigen Investitionskosten verbunden, da die verwendeten Bauteile nur eine geringe Druckfestigkeit aufweisen müssen. Außerdem kann bei diesem Förderverfahren in der Regel zur Aufrechterhaltung eines stabilen Förderzustands bei Voll- und Teillastförderung auf eine geregelte Zuführung des Fördergasstroms in die Förderleitung verzichtet werden.

Ferner treten im Fördersystem keine impulsartigen Belastungen auf, die durch eine verstärkte Unterstützungskonstruktion für die Förderleitung aufgefangen werden müssen. Durch die hohe Fördergeschwindigkeit können sich beim Auftreffen plastifizierbarer Schüttgutpartikel auf die Förderleitung an deren innerer Wandung Beläge aus aufgeschmolzenem Schüttgut bilden, die sich bei der Förderung in Form von Folien oder Fäden ("Engelshaar") periodisch von der Förderleitung ablösen und das Schüttgut verunreinigen.

Bei der mit niedriger Geschwindigkeit erfolgenden Langsamförderung kann dieser unerwünschte Effekt vermieden werden. Darüber hinaus lässt sich durch dieses Förderverfahren die Entstehung staubförmigen Abriebs insbesondere bei spröden und harten Schüttgütern positiv beeinflussen. Es ist jedoch erforderlich, eine Anlage zur Langsamförderung mit einer Einrichtung zur geregelten Einstellung des zugeführten Fördergasstroms zu versehen, da bei einer für Vollast ausgelegten Förderanlage bei Verringerung der zu fördernden Schüttgutmenge oder Verkürzung des Förderwegs instabile Förderzustände auftreten können, die hohe mechanische Belastungen der Förderanlage zur Folge haben.

**Stand der Technik**

Die WO 99/37565 A1 offenbart eine Vorrichtung sowie ein Verfahren zur Flugförderung von Feststoffpartikeln. Dort wird die Fördergasgeschwindigkeit gemessen und es wird eine Fördergasquelle derart eingestellt, dass die Fördergasgeschwindigkeit bei verschiedenen Beladungen des Fördergasstroms mit Feststoffpartikeln beibehalten wird.

Die US 5,813,801 A beschreibt ein Verfahren zur pneumatischen Schüttgutförderung, bei dem eine Fördergasmenge auf einen vorgegebenen Wert eingestellt wird. In diesem Zusammenhang wird auch die Leckgasmenge gemessen.

Aus der US 4,386,678 A ist ein Verfahren zur Förderung eines Brennstoffgemisches bekannt, bei dem ein Förderdruck auf einen vorgegebenen Wert geregelt und die Fördergasmenge gemessen wird.

Aus dem Fachartikel von D. Heep et al. in: Förderluftmanagement Teil 1, Schüttgut 5 (1995) Nr. 1, Seiten 21 bis 24, ist eine pneumatische Förderanlage bekannt, bei der eine Anpassung der Förderluftmenge an sich ändernde Betriebsbedingungen sowie die Einhaltung einer gewählten Fördergeschwindigkeit angesprochen ist.

Ein Verfahren zur pneumatischen Langsamförderung von Schüttgut ist aus der Patentschrift EP 0 490 174 B1 bekannt. Das Schüttgut wird mittels eines bevorzugt als Zellenradschleuse ausgebildeten Schleusorgans aus einem Aufgabebehälter in eine Förderleitung gespeist und von einem der Förderleitung durch eine Reinluftleitung zugeführten Fördergasstrom portionsweise zu einem Zielort gefördert. In der Druckgasleitung ist ein Stellventil angeordnet, mittels dessen die Menge des zugeführten Fördergasstroms einstellbar ist. Die Einstellung wird von einem Regler in Abhängigkeit vom Druck in der Förderleitung im Bereich der Auslassöffnung des Schleusorgans vorgenommen, der auf einen zuvor festgelegten Sollwert geregelt wird. Alternativ kann die Druckdifferenz zwischen der Förderleitung im Bereich der Auslassöffnung des Schleusorgans und dessen Einlassöffnung als Regelgröße zur Veränderung des Durchsatzes von Fördergas als Stellgröße zur Regelung herangezogen werden. In beiden Fällen kann das Verhältnis des Durchsatzes von Schüttgut und Fördergas auf einem konstanten Wert gehalten werden, so dass sich auch dann ein stabiler Förderzustand einstellt, wenn über das Schleusorgan ein Teil des zugeführten Fördergases als Leckluftströmung aus dem Fördersystem entweicht.

In der Druckschrift US 4,059,310 wird ein weiteres Verfahren zur Konstanthaltung des Verhältnisses von Schüttgutstrom zu Fördergasstrom beschrieben, bei dem der Druck in der Zuführleitung für das Fördergas durch Verändern der Drehzahl der Zellenradschleuse auf einen konstanten Wert geregelt wird. Die Menge des in das Fördersystems eingespeisten Schüttguts ändert sich dabei in Abhängigkeit von der Drehzahl der Zellenradschleuse.

In der Druckschrift EP 0 599 173 A1 wird eine lavaldüsenartige Vorrichtung mit veränderlichem Düsenquerschnitt als Regeleinrichtung zur Einstellung eines vorgegebenen Fördergasstroms offenbart. Die Veränderung des Düsenquerschnitts erfolgt dabei in Abhängigkeit vom Druck in der Reinluftleitung stromab der verstellbaren Düse, der so auf einem vorgegebenen Wert gehalten wird.

In der Patentanmeldung WO 97/45351 wird vorgeschlagen, zur Verbesserung der Stabilität einer pneumatischen Langsamförderung von Schüttgut mit veränderlicher Qualität, Feuchtigkeit oder Temperatur eine unscharfe Regelung einzusetzen, bei welcher der Druck des Fördergases im Bereich des Schleusorgans gemessen und die Instabilität des gemessenen Schleusendrucks über eine bestimmte Dauer mittels eines vorher bestimmten Stabilitätskriteriums bestimmt wird.

Bei den zuletzt aufgeführten Förderverfahren wird also der Förderdruck auf einen vorgegebenen Wert oder Stabilitätsbereich geregelt. Die Produkteigenschaften des zu fördernden Schüttguts werden nicht oder nur in geringem Umfang erfasst. Bei einer Förderung von Produkten mit stark voneinander abweichenden Eigenschaften in einer Förderanlage kann der Regler den sehr unterschiedlichen Anforderungen an den notwendigen Förderdruck nicht von sich aus folgen, vielmehr muss der Betreiber der Anlage für jedes Förderprodukt manuell eine spezifische Regelcharakteristik anwählen. Dieses Vorgehen ist unkomfortabel und birgt die Gefahr fehlerhafter Einstellungen, die beispielsweise ein Verstopfen der Förderleitung zur Folge haben können.

### Aufgabe

Der vorliegenden Erfindung liegt die Aufgabe zugrunde, in einer Förderanlage für Schüttgutpfropfen auch Schüttgüter mit sehr unterschiedlichen Produkteigenschaften zuverlässig und ohne manuelle Anpassung des Reglers fördern zu können.

### Lösung

Die Aufgabe wird erfindungsgemäß durch ein Verfahren mit den Verfahrensschritten gemäß Anspruch 1 sowie durch die Vorrichtung mit den Merkmalen gemäß Anspruch 4 gelöst.

In Abkehr von der im Stand der Technik vertretenen Lehre wird erfindungsgemäß also nicht der Druck des Fördergases, sondern dessen Strömungsgeschwindigkeit auf einen vorgegebenen Wert geregelt. Während der zur Aufrechterhaltung einer stabilen Langsamförderung vorzugebende Soll-Wert des Förderdrucks $p_{F\,soll}$ in erheblichem Maße von den Eigenschaften des zu fördernden Schüttguts abhängig ist, kann eine für alle zu fördernden Schüttgüter einheitliche Anfangsgeschwindigkeit $v_{A\,soll}$ des Fördergases vorgegeben werden, die von einer Regeleinrichtung auf einen im wesentlichen konstanten Wert geregelt wird. Eine manuelle Einstellung unterschiedlicher Regelcharakteristiken ist daher nicht erforderlich.

Die Anfangsgeschwindigkeit $v_A$ des Fördergases in der Förderleitung im Bereich der Schüttgutaufgabe ist eine theoretische Größe, die sich aus dem mittleren Mengenstroms $V_R$ des der Förderleitung zugeführten, komprimierten Fördergases und dem Querschnitt der Förderleitung bestimmen lässt. Für den Fall einer kreisrunden Förderleitung mit dem Anfangsdurchmesser $D_A$ gilt daher:

$$v_A = \dot{V}_{R\,real} \cdot 4 / (\pi \cdot D_A^{\,2})$$

$\dot{V}_{R\,real}$ ist dabei der Volumenstrom des komprimierten Fördergases.

Die tatsächliche Geschwindigkeit des Fördergases in der Förderleitung im Bereich der Schüttgutaufgabe weicht von dieser gedanklichen Größe selbstverständlich durch die mitgeführten, den freien Querschnitt der Förderleitung verringernden Schüttgutpartikel ab und kann durch das portionsweise Fördern des Schüttguts deutlichen Schwankungen unterliegen.

Eine zur Durchführung des erfindungsgemäßen Verfahrens geeignete Vorrichtung umfasst mindestens einen Aufgabeort, mindestens einen Zielort sowie eine Aufgabe- und Zielorte verbindende Förderleitung, in die im Bereich der Aufgabeorte mittels Schleusorganen Schüttgut einspeisbar ist, wobei die Vorrichtung eine Messeinrichtung zur Bestimmung mindestens einer Kenngröße sowie Regeleinrichtung aufweist, mit welcher der Ist-Wert die Anfangsgeschwindigkeit $v_{A\,ist}$ des Fördergases unter Berücksichtigung der gemessenen Kennwerte auf einen vorgegebenen Soll-Wert der Anfangsgeschwindigkeit $v_{A\,soll}$ des Fördergases durch Verändern der Reingasmenge $\dot{V}_R$ regelbar ist.

Die abhängigen Ansprüche betreffen bevorzugte Ausführungsformen der Erfindung.

### Figuren

Die Figuren stellen beispielhaft und schematisch verschiedene Ausführungen der Erfindung dar.

Es zeigen:

Fig. 1    ein Beispiel einer nicht-erfindungsgemäßen Anlage zur Flugförderung von Schüttgut.

Fig. 2    eine Anlage zur Durchführung des erfindungsgemäßen Verfahrens

Fig. 3    eine weitere Anlage zur Durchführung des Verfahrens

Fig. 4    ein Beispiel einer nicht-erfindungsgemäßen Anlage zur Flugförderung von Schüttgut.

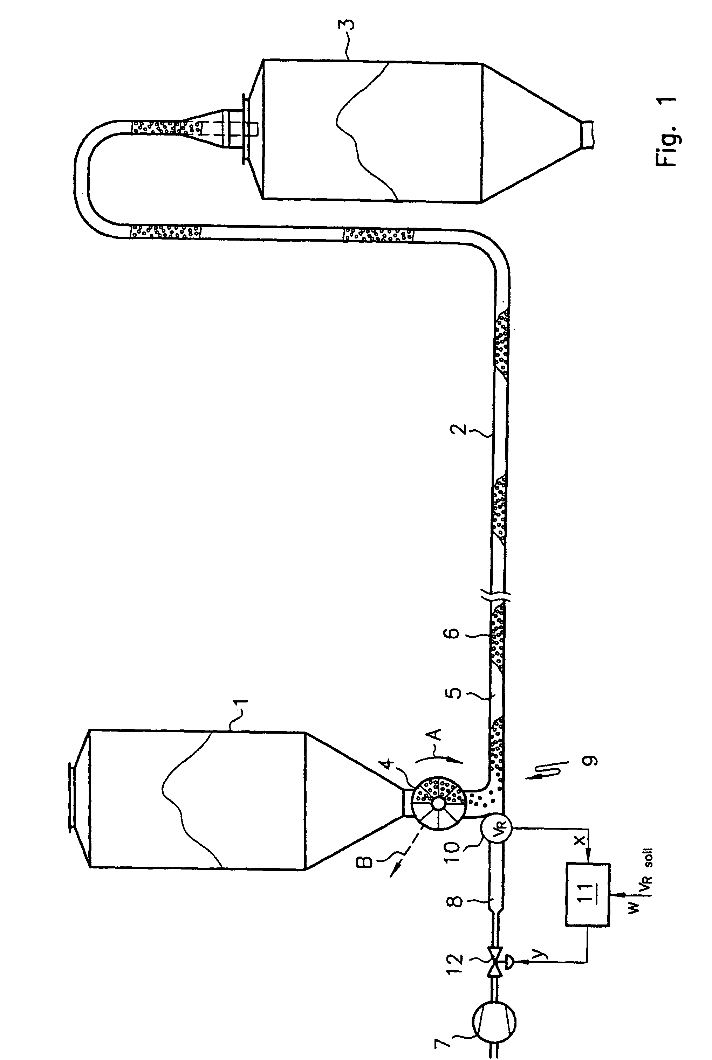

Aus der in Fig. 1 dargestellten Anlage zur pneumatischen Langsamförderung von Schüttgut geht die gedankliche Grundlage der Erfindung anschaulich hervor.

Die Förderanlage umfasst einen Aufgabebehälter 1, der über eine Förderleitung 2 einheitlichen Durchmessers mit einem als Zielort dienenden Empfangsbehälter 3 verbunden ist. Das Schüttgut wird mittels eines Schleusorgans in Form einer Zellenradschleuse 4 aus dem Aufgabebehälter 1 in die Förderleitung 2 eingespeist und mit Hilfe komprimierten, sich im Verlaufe der Förderung entspannenden Fördergases in Form diskreter, zueinander durch Gaspolster 5 beabstandeter Schüttgutpropfen 6 zum Zielort transportiert. Das komprimierte Fördergas wird von einem Verdichter 7 bereitgestellt und der Förderleitung 2 über eine Reingasleitung 8 im Bereich der Produktaufgabe 9 zugeführt.

In der Reinluftleitung 8 ist ein Sensor 10 zur Messung der über den Querschnitt der Reinluftleitung gemittelten Strömungsgeschwindigkeit $v_R$ angeordnet. Sensoren zur Messung der Geschwindigkeit von Fluidströmungen sind im Stand der Technik allgemein bekannt und können beispielsweise als Hitzdraht-Anemometer ausgeführt sein. Da der Querschnitt der Reinluftleitung 8 im Bereich des Sensors 10 im Ausführungsbeispiel dem Querschnitt der Förderleitung 2 im Bereich der Schüttgutaufgabe 9 entspricht, stimmen die theoretische Anfangsgeschwindigkeit $v_A$ und die gemessene Geschwindigkeit $v_R$ überein, sofern im Bereich der Schüttgutaufgabe 9 kein Fördergas aus dem System verloren geht. In einem Regler 11 werden der Messwert der Regelgröße x ($\dot{V}_{R\ ist}$) und ein Soll-Wert w ($\dot{V}_{R\ soll}$) miteinander verglichen. Abweichungen werden durch Verstellen des Ventils 12 (Stellgröße y) in der Reinluftleitung 8 kompensiert, mittels dessen sich der Volumenstrom und damit auch die Strömungsgeschwindigkeit des Fördergases verändern läßt.

Wird in einer derartigen Förderanlage beispielsweise ein Granulat aus relativ hartem Niederdruckpolyethylen HDPE gefördert, kann im Bereich der Schüttgutaufgabe 9 ein Förderdruck von 1 bar über Umgebungsdruck anliegen, der sich im Verlauf der Förderung zum Empfangsbehälter 3 auf Umgebungsdruck entspannt. Um in der gleichen Anlage auch ein granuläres Schüttgut aus weichem Hochdruckpolyethylen LLDPE stabil fördern zu können, ist hingegen beispielsweise ein Förderdruck von 2 bar erforderlich. Der Sollwert des Förderdrucks ist also in erheblichem Maße von den Eigenschaften des zu fördernden Schüttguts abhängig. Eine noch größere Spreizung ist möglich, wenn sich zusätzlich die Durchsätze und Förderlängen unterscheiden, beispielsweise bei der wechselweisen Beschickung mehrerer Empfangsbehälter 3.

Die Anfangsgeschwindigkeit $v_{A\ soll}$ des Fördergases in der Förderleitung 2 im Bereich der Schüttgutaufgabe 9 beträgt für eine stabile Förderung hingegen für beide Produkte beispielsweise 2 m/s, die vom Regler 11 auf einen im wesentlichen konstanten Wert $v_{A\ ist}$ geregelt wird. Dieses Kriterium gilt auch bei schwankenden Beladungen und sich ändernden Förderlängen. Die ebenfalls theoretische Endgeschwindigkeit $v_E$ des Fördergases in der Förderleitung im Bereich des Empfangsbehälters 3 ändert sich selbstverständlich in Abhängigkeit vom Förderdruck und beträgt im Ausführungsbeispiel mit nicht abgestufter Förderleitung bei der Förderung von HDPE 4 m/s und bei LLDPE 6 m/s.

Die in Fig. 1 dargestellt Bestimmung der Anfangsgeschwindigkeit $v_A$ durch Messung der Strömungsgeschwindigkeit $v_R$ in der Reinluftleitung führt jedoch ohne besondere Maßnahmen nicht zum Erfolg, wenn über das Schleusorgan eine größere Leckgasmenge $\dot{V}_L$ aus dem System austritt. Zur Leckgasmenge $\dot{V}_L$ einer Zellenradschleuse 4 tragen sowohl Schöpfverluste der schüttgutfreien Kammern des sich in Richtung des Pfeils A drehenden Zellenrads als auch Spaltströmungen zwischen den Stegen des Zellenrads und dem Schleusengehäusen bei.

Die Höhe der Leckgasmenge $\dot{V}_L$ ist von der Bauart der Zellenradschleuse 4, dem Differenzdruck zwischen Zulauf- und Auslaufschacht und der Drehzahl n der Schleuse abhängig und wird für jeden Schleusentyp üblicherweise durch Messung ermittelt. Die Meßergebnisse können als Funktion $\dot{V}_L = f (p_F,n)$ in einem Rechner hinterlegt werden. Eine Leckgaskompensation aber kann grundsätzlich auch durch on-line-Messung der aus der Zellenradschleuse abgeführten Leckgasmenge $\dot{V}_L$ (gestrichelter Pfeil B) erfolgen. In beiden Fällen ist die Förderanlage mit einer zusätzlichen Vorrichtung zur Messung des Förderdrucks und einer Recheneinrichtung auszurüsten.

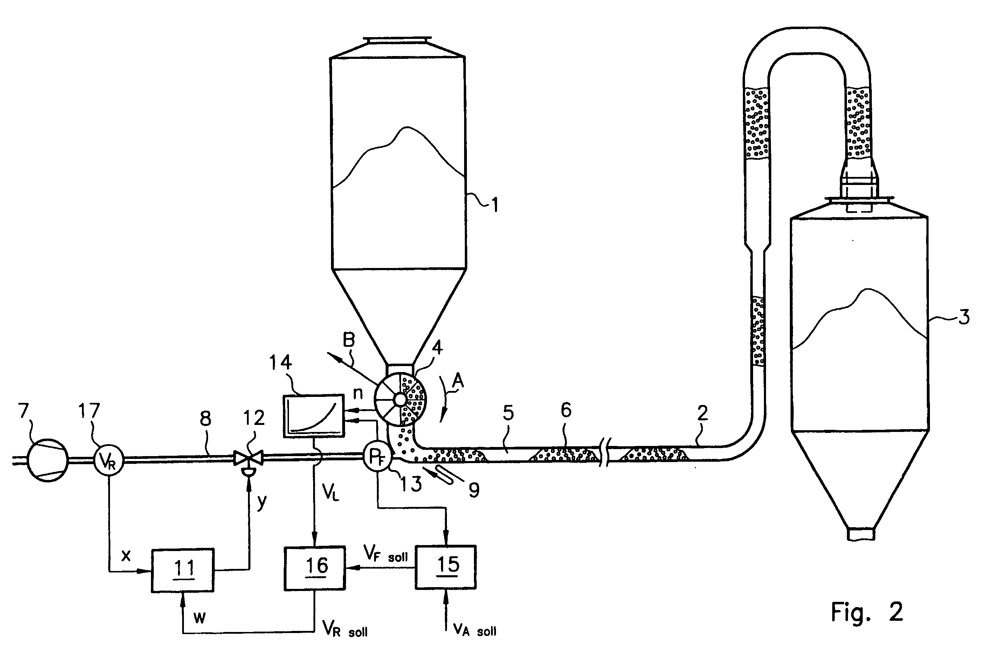

Fig. 2 zeigt eine erfindungsgemäße Anlage.

Im Ausführungsbeispiel nach Fig. 2 ist eine derartige Leckluftkompensation vorgesehen.

Die Fördereinrichtung entspricht im wesentlichen der zuvor beschriebenen Anlage. Abweichend davon ist die Förderleitung 2 abgestuft ausgeführt und weist anfänglich einen Durchmesser $D_A$ auf, der sich gegen Ende der Förderleitung in Form einer Stufe auf einen Durchmesser $D_E$ erweitert. Durch die Querschnittserweiterung kann die Fördergeschwindigkeit im Endbereich der Förderleitung 3 herabgesetzt werden.

Die Regeleinrichtung umfaßt einen Sensor 13 zur Messung des Förderdrucks $p_F$ im Bereich der Produktaufgabe, dessen Meßwert in einer ersten Rechnereinheit 14 in Verbindung mit der Drehzahl n zur Bestimmung der Leckluftmenge $\dot{V}_L$ herangezogen wird. Die zur Berechnung erforderliche Funktion $\dot{V}_L = f (p_F,n)$ wurde vor dem Einbau der Zellenradschleuse 4 in die Förderanlage auf einem Prüfstand ermittelt und in der Rechnereinheit 14 hinterlegt.

Der Sensor 13 ist im Ausführungsbeispiel in der Reinluftleitung angeordnet, damit ein Kontakt mit Schüttgutpartikeln vermieden wird. Grundsätzlich ist es jedoch möglich, den Sensor 13 auch unterhalb der Zellenradschleuse 4 oder am Anfang der Förderleitung 2 einzubauen.

Parallel dazu errechnet eine zweite Rechnereinheit 15 unter Berücksichtigung des mittels Sensor 13 bestimmten Förderdrucks $p_F$ die zur Aufrechterhaltung der vorgegebenen Anfangsgeschwindigkeit $v_{A\,soll}$ erforderliche Fördergasmenge $\dot{V}_{F\,soll}$. Die Grundlage für die Berechnung bildet die bekannte, auf normierte Volumenströme (Normdruck 1 bar) abgestellte Beziehung:

$$\dot{V}_{F\,soll} = v_{A\,soll} * (p_F + p_{atm})/p_{atm} * \pi/4 * D_A{}^2$$

Zur Herleitung der Beziehung wird auf die einschlägige Fachliteratur, beispielsweise auf das Lehrbuch "Pneumatische Förderung", Kap. 4.3, Wolfgang Siegel, 1. Auflage 1991, Vogel Verlag verwiesen.

Der Rechenwert für $\dot{V}_L$ und die Sollvorgabe für die Fördergasmenge $\dot{V}_{F\,soll}$ werden nachfolgend an eine weitere Recheneinheit 16 übergeben, die den erforderlichen Reingasstrom $\dot{V}_{R\,soll}$ nach der Beziehung

$$\dot{V}_{R\,soll} = \dot{V}_{F\,soll} + \dot{V}_L$$

errechnet.

Der Rechenwert $\dot{V}_{R\,soll}$ wird als Sollwert w dem Regler 11 mitgeteilt, der durch Verändern der Stellgröße y das Ventil 12 in der Weise verstellt, daß der durch den Sensor 17 gemessene Reingasstrom in der Reinluftleitung der berechneten Sollwertvorgabe $V_{R\,soll}$ entspricht.

Über den Umweg einer Druck- und Volumenstrommessung wird also ebenfalls die Anfangsgeschwindigkeit $v_A$ als Regelgröße durch Verändern des Fördergasstroms als Stellgröße auf einen Sollwert geregelt, wobei Leckageverluste des Schleusorgans kompensiert werden.

Um das Regelverhalten zu stabilisieren und ein Übersteuern des Reglers sicher zu vermeiden, werden Änderungen des gemessenen Förderdrucks $p_F$ bei der Bestimmung der Leckluftmenge $\dot{V}_L$ unverzüglich berücksichtigt, gehen in die Berechnung der erforderlichen Fördergasmenge $\dot{V}_F$ aber nur zeitlich gemittelt ein.

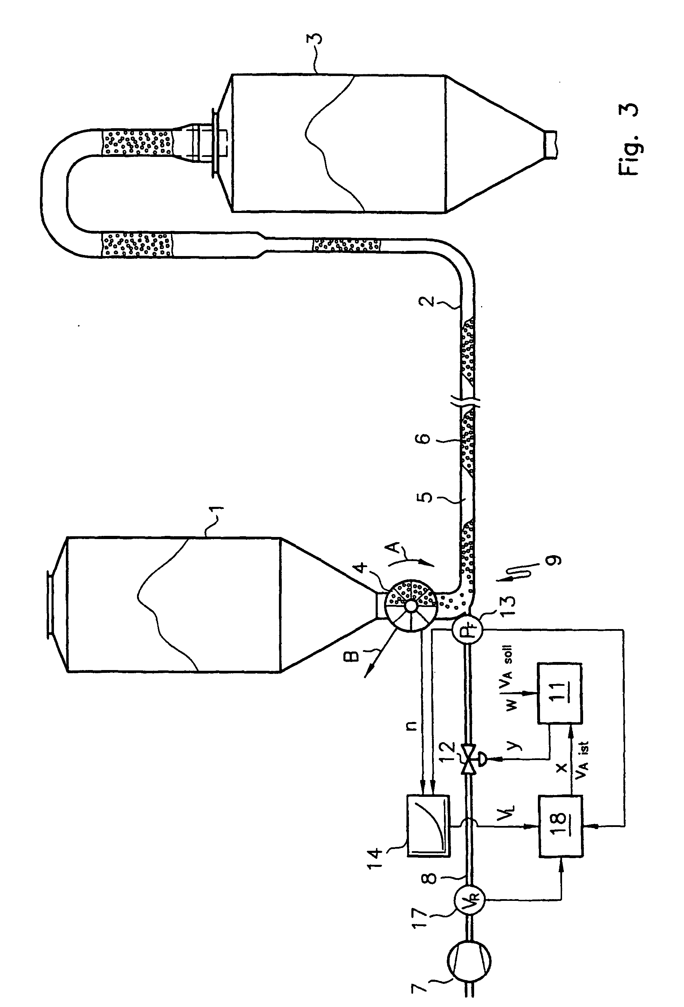

Ein anderes Ausführungsbeispiel ist in Fig. 3 dargestellt. In einer Rechnereinheit 18 wird aus dem vom Sensor 17 gemessenen Reingasmengenstrom $\dot{V}_R$ und dem von Sensor 13 ermittelten Förderdruck $p_F$ unter Berücksichtigung der von der Rechnereinheit 14 bestimmten Leckluftmenge der Ist-Wert der Anfangsgeschwindigkeit $v_{A\,ist}$ errechnet, und zwar nach der Beziehung:

$$v_{A\,ist} = \dot{V}_{F\,ist} * p_{atm} / (p_F + p_{atm}) * 4/(\pi * D_A{}^2)$$

mit

$$\dot{V}_{F\,ist} = \dot{V}_{R\,ist} - \dot{V}_L$$

Im Regler 11 werden dieser Rechenwert mit dem vorgegebenen Soll-Wert der Anfangsgeschwindigkeit $v_{A\,soll}$ verglichen und das Ventil 12 bis zu einer hinreichend genauen Übereinstimmung von Soll- und Ist-Wert der Anfangsgeschwindigkeit verstellt.

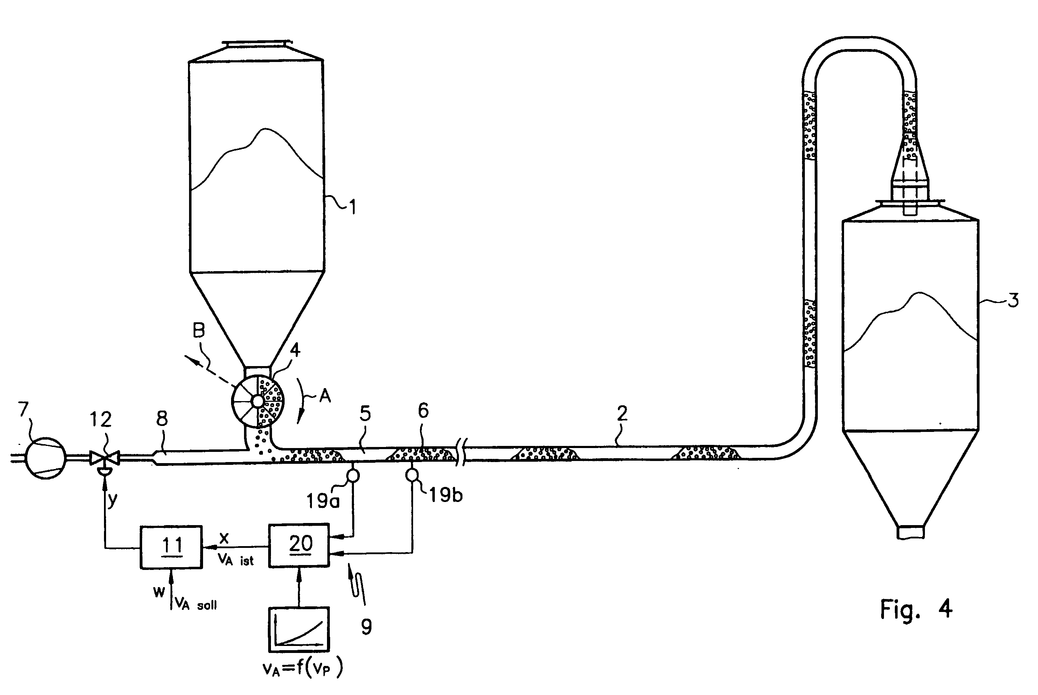

Bei der nicht-erfindungsgemäßen Ausführung nach Fig. 4 wird die Anfangsgeschwindigkeit $v_{A\,soll}$ des Fördergases indirekt über die Geschwindigkeit $v_{P\,ist}$ der vom Gasstrom vorwärtsbewegten Schüttgutpfropfen bestimmt, da die Geschwindigkeiten naturgemäß miteinander korrelieren. In der Förderleitung 2 sind im Bereich der Schüttgutaufgabe 9 in Förderrichtung zueinander beabstandet zwei induktive Schüttgutsensoren 19a, 19b (Näherungsinitiatoren) angeordnet, mittels derer die Anwesenheit von Schüttgutpfropfen im betreffenden Leitungsabschnitt feststellbar ist. Die Schüttgutsensoren 19a, 19b übermitteln ihre Meßsignale an eine Rechnereinheit 20, die aus dem Zeitversatz der eingehenden Signale die Geschwindigkeit $v_{P\,ist}$ der Schüttgutpfropfen berechnet und anhand einer zuvor hinterlegten Funktion $v_A = f(v_P)$ die Anfangsgeschwindigkeit $v_{A\,ist}$ des Fördergases ermittelt. Dieser Wert wird an den Regler 11 weitergeleitet und in der zuvor beschrieben Weise mit dem Sollwert $v_{A\,soll}$ verglichen. Bei einer linearen Abhängigkeit der Gas- und Pfropfengeschwindigkeit ist es sogar möglich, $v_{P\,ist}$ unmittelbar auf einen Sollwert $v_{P\,soll}$ zu regeln.

Selbstverständlich können auch andere Verfahren und Vorrichtungen zur Bestimmung der Pfropfengeschwindigkeit Verwendung finden, beispielsweise die Tomographie, Lichtschranken oder Schwinggabeln.

Die Erfindung ist nicht auf die angeführten Beispiele beschränkt. Sie umfaßt auch solche Ausführungsformen, bei denen die angeführten Kennwerte indirekt über gemessene Hilfsgrößen bestimmt werden, beispielsweise die Umrechnung von Volumen- in Massenströme oder die Bestimmung eines Mengenstroms über den Staudruck einer Blende. Auch können andere Schleusorgane als Zellenradschleusen zum Einsatz kommen.

## Bezugszeichenliste

| | |
|---|---|
| 1 | Aufgabebehälter |
| 2 | Förderleitung |
| 3 | Empfangsbehälter |
| 4 | Zellenradschleuse |
| 5 | Gaspolster |
| 6 | Schüttgutpfropfen |
| 7 | Verdichter |
| 8 | Reingasleitung |
| 9 | Bereich der Produktaufgabe |
| 10 | Sensor (Ist-Wert Reingasgeschwindigkeit) |

11　Regler
12　Ventil
13　Sensor (Ist-Wert Förderdruck)
14　Rechnereinheit (Ist-Wert Leckluftmenge)
15　Rechnereinheit (Soll-Wert Fördergasmenge)
16　Rechnereinheit (Soll-Wert Reingasmenge)
17　Sensor (Ist-Wert Reingasmenge)
18　Rechnereinheit (Soll-Wert Anfangsgeschwindigkeit)
19　Schüttgutsensor
20　Rechnereinheit (Ist-Wert Pfropfengeschwindigkeit)

**Parameter**

n　Drehzahl
p　Druck

v　Geschwindigkeit
$\dot{V}$　Mengenstrom (Volumenstrom)

**Indizes**

A　Anfang
atm　atmosphärisch
E　Ende
F　Förderist　Ist-Wert

P　Pfropfen
R　Reinluftleitung
real　nicht normierter Volumenstrom
soll　Soll-Wert

**Patentansprüche**

1. Verfahren zur pneumatischen Förderung von Schüttgut, insbesondere von Kunststoffgranulaten, durch eine Förderleitung, bei dem das Schüttgut an mindestens einem Aufgabeort mittels eines Schleusorgans in einen einstellbaren Fördergasstrom eingespeist und in Form diskreter, durch Polster aus Fördergas zueinander beabstandeter Schüttgutpfropfen vom Aufgabeort zu mindestens einem Zielort transportiert wird, mit folgenden Verfahrensschritten:

- Vorgabe der Anfangsgeschwindigkeit $v_{A\,soll}$ des Fördergases in der Förderleitung im Bereich der Schüttgutaufgabe, bei der sich für alle zu fördernden Produkte ein stabiler Förderzustand einstellt,
- Messung des Förderdrucks $p_{F\,ist}$ und der Reingasmenge $\dot{V}_{R\,ist}$
- Bestimmung der aus dem Schleusorgan austretenden Leckgasmenge $\dot{V}_L$,
- Berechnung der Anfangsgeschwindigkeit $v_{A\,ist}$ aus dem Förderdruck $p_{F\,ist}$, der Reingasmenge $\dot{V}_{R\,ist}$ und der Leckgasmenge $\dot{V}_L$,
- Verändern der Reingasmenge $\dot{V}_R$ in der Weise, dass der Soll-Wert der Anfangsgeschwindigkeit $v_{A\,soll}$ im wesentlichen dem Ist-Wert der Anfangsgeschwindigkeit $v_{A\,ist}$ entspricht.

2. Verfahren nach Anspruch 1, **dadurch gekennzeichnet, dass** die Anfangsgeschwindigkeit $v_{A\,ist}$ des Fördergases aus der gemessenen Pfropfengeschwindigkeit $v_{P\,ist}$ im Bereich der Schüttgutaufgabe (9) bestimmt wird.

3. Verfahren nach Anspruch 2, **dadurch gekennzeichnet, daß** die Pfropfengeschwindigkeit $v_{P\,ist}$ aus zeitversetzt ermittelten Signalen für die Anwesenheit von Schüttgutpfropfen (6) an in Förderrichtung zueinander beabstandeten Orten der Förderleitung (2) ermittelt wird.

4. Vorrichtung zur Durchführung des Verfahrens nach Anspruch 1, umfassend mindestens einen Aufgabeort, mindestens einen Zielort sowie eine Aufgabe- und Zielorte verbindende Förderleitung, in die im Bereich der Aufgabeorte mittels mindestens einer Zellenradschleuse Schüttgut einspeisbar ist, wobei die Vorrichtung eine Messeinrichtung zur Bestimmung mindestens einer Kenngröße sowie eine Regeleinrichtung aufweist, mit welcher der Ist-Wert die Anfangsgeschwindigkeit $v_{A\,ist}$ des Fördergases unter Berücksichtigung der gemessenen Kennwerte auf einen vorgegebenen Soll-Wert der Anfangsgeschwindigkeit $v_{A\,soll}$ des Fördergases durch Verändern der Reingasmenge $\dot{V}_R$ regelbar ist, wobei

- in der Reinluftleitung eine Einrichtung zur Messung der Strömungsgeschwindigkeit $v_R$ angeordnet ist.
- im Bereich der Produktaufgabe eine Einrichtung zur Messung des Förderdrucks $p_F$ angeordnet ist, wobei eine erste Rechnereinheit vorgesehen ist, in welcher ein Messwert der Einrichtung zur Messung des Förderdrucks $p_F$ in Verbindung mit der Drehzahl n der Zellenradschleuse zur Bestimmung der Leckluftmenge $\dot{V}_L$ herangezogen wird.

5. Vorrichtung nach Anspruch 4, **dadurch gekennzeichnet, dass** in der Reinluftleitung eine Einrichtung zur Messung der Reingasmenge $\dot{V}_R$ angeordnet ist.

6. Vorrichtung nach Anspruch 4, **dadurch gekennzeichnet, dass** in der Förderleitung im Bereich der Schüttgutaufgabe Mittel zur Messung der Pfropfengeschwindigkeit angeordnet sind.

7. Vorrichtung nach Anspruch 6, **dadurch gekennzeichnet, dass** die Mittel zueinander in Förderrichtung beabstandete Schüttgutsensoren (19a, 19b) umfassen.

**Claims**

1. Method for pneumatically conveying bulk material, in particular plastic pellets, through a feed pipe, in which the bulk material is fed in an adjustable conveying gas stream in at least one area of feeding by means of a sluice unit and is transported in the form of discrete bulk plugs separated from each other by cushions of conveying gas from the area of feeding to at least one area of destination, comprising the following method steps:

   - predetermination of the initial speed $v_{A\ desired}$ of the conveying gas in the feed pipe in the area of the bulk feeding, at which a resilient conveying condition is reached for all products to be conveyed,
   - measurement of the feed pressure $p_{F\ actual}$ and the amount of clean gas $\dot{V}_{R\ actual}$,
   - definition of the amount of leakage gas $\dot{V}_L$ escaping from the sluice unit,
   - calculation of the initial speed $v_{A\ actual}$ from the feed pressure $p_{F\ actual}$, the amount of pure gas $\dot{V}_{R\ actual}$ and the amount of leakage gas $\dot{V}_L$,
   - alteration of the amount of pure gas $\dot{V}_R$ in such a way that the desired value of the initial speed $v_{A\ desired}$ essentially corresponds to the actual value of the initial speed $v_{A\ actual}$.

2. Method according to claim 1, **characterized in that** the initial speed $v_{A\ actual}$ of the conveying gas is defined from the measured plug speed $v_{P\ actual}$ in the area of the bulk feeding (9).

3. Method according to claim 2, **characterized in that** the plug speed $v_{P\ actual}$ is determined from delayed signals for the presence of bulk plugs (6) in areas distant from each other of the feed pipe (2).

4. Device for the realization of the method according to claim 1, comprising at least one area of feeding, at least one area of destination as well as a feed pipe connecting the areas of feeding and destination, in which bulk material can be fed by means of at least one cellular wheel sluice in the area of the areas of feeding, wherein the device comprises a measuring system for determining at least one parameter as well as a control unit, by which the actual value under consideration of the measured parameters the actual value of the initial speed $v_{A\ actual}$ of the conveying gas is adjustable to a predetermined desired value of the initial speed $v_{A\ desired}$ of the conveying gas by means of alteration of the amount of pure gas $\dot{V}_R$, wherein

   - a device for measuring the flow velocity $\dot{V}_R$ is arranged in the pure air pipe,
   - a device for measuring the feed pressure $p_F$ is arranged in the area of the product feeding, wherein a first computer unit is provided, in which a measured value of the device for measuring the feed pressure $p_F$ is taken in connection with the revolution speed n of the cellular wheel sluice for determining the amount of leakage gas $\dot{V}_L$.

5. Device according to claim 4, **characterized in that** a device for measuring the flow velocity $\dot{V}_R$ is arranged in the pure air pipe.

6. Device according to claim 4, **characterized in that** means for measuring the plug speed are arranged in the area of feeding in the feed pipe.

7. Device according to claim 6, **characterized in that** the means comprise bulk sensors (19a, 19b) which are arranged distant from each other in the feed direction.

**Revendications**

1. Procédé de transport pneumatique d'un produit en vrac, notamment de granulés de matière plastique, au moyen d'une canalisation de transport, selon lequel le produit en vrac est introduit, en au moins un emplacement d'arrivée, au moyen d'un organe formant sas dans un courant de gaz de transport réglable et est transporté sous la forme de blocs discrets du produit en vrac, maintenus à distance les uns des autres par un tampon de gaz de transport, depuis l'emplacement d'amenée au moins à un emplacement de destination, présentant les étapes de procédé suivantes:

   - prédétermination de la vitesse initiale $v_{A\ consigne}$ du gaz de transport dans la direction de transport dans la zone d'amenée du matériau en vrac, lors de laquelle un état stable de transport s'établit pour tous les produits devant être transportés,
   - mesure de la pression de transport $p_{F\ réelle}$ et de la quantité de gaz pur $V_{R\ réelle}$,
   - détermination de la quantité de gaz de fuite $V_L$, qui sort de l'organe formant sas,
   - calcul de la vitesse initiale $v_{A\ réelle}$ à partir de la pression de transport $p_{F\ réelle}$, de la quantité de gaz pur $V_{R\,réelle}$ et de la quantité de gaz de fuite $V_L$,

- modification de la quantité de gaz de purge $V_R$ de telle sorte que la valeur de consigne de la vitesse initiale $v_{A\,consigne}$ correspond essentiellement à la valeur réelle de la vitesse initiale $v_{A\,réelle}$.

2. Procédé selon la revendication 1, **caractérisé en ce que** la vitesse initiale $v_{A\,réelle}$ du gaz de transport est déterminée par la vitesse mesurée $v_{P\,réelle}$ des blocs dans la zone de l'arrivée (9) du matériau en vrac.

3. Procédé selon la revendication 2, **caractérisé en ce que** la vitesse $v_{P\,réelle}$ des blocs est déterminée par des signaux déterminés d'une manière décalée dans le temps pour la présence de blocs (10) du produit en vrac en des emplacements de la canalisation de transport (2), qui sont distants les uns des autres dans la direction de transport.

4. Dispositif pour la mise en oeuvre du procédé selon la revendication 1, comprenant au moins un emplacement d'arrivée, au moins un emplacement de destination ainsi qu'une canalisation de transport reliant l'emplacement d'arrivée et l'emplacement de destination et dans laquelle le produit en vrac peut être introduit dans la zone des emplacements d'arrivée à l'aide d'au moins un sas à roue cellulaire, le dispositif comprenant un dispositif de mesure servant à déterminer au moins une grandeur caractéristique, ainsi qu'un dispositif de régulation, avec lequel la grandeur réelle de la vitesse initiale $v_{A\,réelle}$ du gaz de transport peut être réglée en tenant compte des valeurs caractéristiques mesurées, sur une valeur de consigne prédéterminée de la vitesse initiale $v_{A\,consigne}$ du gaz de transport, par modification de la quantité de gaz pur $v_R$, dans lequel

- un dispositif de mesure de la vitesse d'écoulement $v_R$ est disposé dans la canalisation d'air pur,
- un dispositif pour mesurer la pression de transport $p_F$ est disposé dans la zone d'arrivée du produit, et il est prévu une première unité de calcul, dans laquelle une valeur de mesure du dispositif servant à mesurer la pression de transport $p_F$ est utilisée en liaison avec la vitesse de rotation n du sas à roue cellulaire pour déterminer la quantité d'air de fuite $V_L$.

5. Dispositif selon la revendication 4, **caractérisé en ce qu'**un dispositif pour mesurer la quantité de gaz pur $V_R$ est disposé dans la canalisation d'air pur.

6. Dispositif selon la revendication 4, **caractérisé en ce que** des moyens pour mesurer la vitesse des blocs sont disposés dans la canalisation de transport dans la zone d'arrivée du produit en vrac.

7. Dispositif selon la revendication 6, **caractérisé en ce que** les moyens comprennent des détecteurs (19a, 19b) du produit en vrac, qui sont réciproquement distants dans la direction de transport.

Fig. 1

Fig. 2

Fig. 3

Fig. 4